# FASCICULE DE BREVET EUROPEEN

(11) **EP 1 121 884 B1**
(45) Date de publication et mention de la délivrance du brevet: **03.03.2004**
(21) Numéro de dépôt: 01420018.2
(22) Date de dépôt: 26.01.2001
(51) Int. Cl.: A47J 37/12

(54) **Appareil électrique de cuisson à cuve amovible**
Elektrisches Kochgerät mit herausnehmbarem Behälter
Electrical cooking appliance with removable bowl

(30) Priorité: 01.02.2000 FR 0001263
(43) Date de publication de la demande: 08.08.2001
(73) Titulaire: SEB S.A., 69130 Ecully (FR)
(72) Inventeur: Sestier, Laurent, 21260 Selongey (FR); Habigand, Patrice, 21260 Veronnes (FR); Zabattini, Bruno, 21260 Selongey (FR)

(56) Documents cités:
- EP-A- 0 604 886
- EP-A- 0 815 786
- EP-A- 0 819 400
- FR-A- 1 510 977

## Description

La présente invention concerne le domaine technique général des appareils électriques de cuisson comportant une cuve montée amovible dans un boîtier. La présente invention concerne en particulier mais non exclusivement les friteuses.

Il est connu du document FR 1 510 977 de réaliser une friteuse à cuve amovible comportant un boîtier formant un logement prévu pour recevoir une cuve de cuisson amovible. La cuve vient reposer sur un bossage central ménagé dans le fond du logement. Un élément chauffant blindé enroulé en spirale entoure le bossage. La cuve n'est pas en contact avec l'élément chauffant blindé. Un thermostat à bulbe est monté au milieu du bossage. Ce thermostat est protégé du rayonnement de la résistance par un écran thermique annulaire. Le fond de la cuve présente un renfoncement annulaire entourant latéralement à distance la périphérie extérieure de l'élément chauffant. Cette construction permet de réaliser un appareil à cuve amovible, mais reste onéreuse.

Il est connu du document EP 0 815 786 de réaliser une friteuse à cuve amovible comportant des moyens de régulation thermique et un interrupteur thermostatique de sécurité placés en contact avec le fond de la cuve. L'interrupteur thermostatique de sécurité présente une inertie thermique moindre que celle des moyens de régulation. Cette disposition permet de couper l'alimentation de la résistance électrique disposée dans le boîtier sous la cuve lorsque la cuve comporte une quantité insuffisante de bain de cuisson sans solliciter le fusible thermique de l'appareil. Une telle construction permet d'obtenir un appareil à cuve amovible présentant de bonnes performances de régulation, mais reste onéreuse.

L'objet de la présente invention est de proposer un appareil électrique de cuisson à cuve amovible de construction économique, présentant de bonnes performances de cuisson, dans lequel les moyens de régulation sont aptes à réguler sans entraîner la fonte du fusible thermique lorsque la cuve comporte une quantité insuffisante de bain de cuisson ou lorsque la cuve ne comporte pas de bain de cuisson.

Cet objet est atteint avec un appareil électrique de cuisson, notamment friteuse, comportant un boîtier formant un logement prévu pour recevoir une cuve de cuisson amovible, des moyens électriques de chauffe venant en contact avec des zones de chauffe de la cuve lorsque la cuve est en place dans le boîtier, des moyens de régulation et un fusible thermique étant montés dans la partie inférieure du logement, les moyens de régulation venant en contact avec une zone de mesure de la cuve lorsque la cuve est en place dans le boîtier, la zone de mesure étant disposée latéralement par rapport aux zones de chauffe, un premier écran thermique protégeant au moins partiellement les moyens de régulation du rayonnement et de la convection thermique issus des moyens électriques de chauffe, du fait que la zone de mesure associée aux moyens de régulation appartient au fond de la cuve, que la face extérieure du fond de la cuve est réalisée en matériau bon conducteur de chaleur dans la zone de mesure, dans les zones de chauffe ainsi que dans une zone intermédiaire reliant les zones de chauffe à la zone de mesure, que le fusible thermique est éloigné de la cuve en place dans le boîtier, et qu'un deuxième écran thermique protège le fusible thermique du rayonnement et au moins partiellement de la convection thermique issus des moyens électriques de chauffe.

Cette construction permet d'obtenir de bonnes caractéristiques de régulation car le premier écran thermique associé à la disposition latérale des moyens de régulation par rapport aux moyens de chauffe permettent de stabiliser rapidement l'environnement thermique des moyens de régulation, ce qui évite les phénomènes de régulation par palier dans lesquels la température du bain de cuisson s'élève progressivement lors des coupures successives des moyens de régulation. De plus le deuxième écran thermique protégeant le fusible thermique associé au matériau bon conducteur de chaleur du fond de la cuve permettent d'obtenir une coupure des moyens de régulation avant la fonte du fusible en l'absence de bain de cuisson dans la cuve ou en présence d'une faible quantité de bain de cuisson dans la cuve.

Avantageusement le fusible thermique est disposé à une altitude inférieure à celle des moyens électriques de chauffe. Cette disposition permet de faciliter l'implantation du fusible thermique dans un environnement thermique protégé des influences directes de l'élément chauffant.

Avantageusement le fusible thermique est disposé latéralement par rapport aux moyens électriques de chauffe. Cette disposition permet de diminuer l'importance du deuxième écran thermique.

Avantageusement les zones de chauffe sont surélevées par rapport à la zone de mesure. Cette disposition permet de limiter l'échauffement de la partie inférieure des moyens de régulation et ainsi de les rendre plus sensibles à la seule variation de température de la zone de mesure.

Avantageusement un troisième écran thermique entoure latéralement les moyens électriques de chauffe. Avantageusement alors le bord supérieur du troisième écran thermique présente une altitude supérieure au fond de la cuve disposée dans le boîtier. Ces dispositions permettent d'améliorer le chauffage de la cuve.

Avantageusement la cuve comporte des parois latérales réalisées en un matériau bon conducteur de chaleur, cette disposition permettant de faciliter l'évacuation des calories apportées par les moyens de chauffe en l'absence de bain de cuisson ou en présence d'une faible quantité de bain de cuisson.

Selon un mode de réalisation, les moyens électriques de chauffe comprennent un élément chauffant blindé.

Alors, selon une construction avantageuse un bouclier est disposé sous l'élément chauffant blindé. Le bouclier peut former tout ou partie du premier et/ou du deuxième écran thermique. Notamment le premier écran thermique peut comprendre une nervure appartenant au bouclier.

Avantageusement un réflecteur est disposé entre l'élément chauffant blindé et le bouclier. Cette disposition permet de limiter la température de la partie inférieure du boîtier.

Selon une caractéristique avantageuse l'élément chauffant blindé comporte un brin chauffant extérieur longeant au moins les 2/3 de la périphérie du bouclier. Avantageusement alors le brin chauffant extérieur se prolonge le long du premier écran thermique. Ces dispositions permettent d'améliorer le chauffage de la cuve.

Selon une autre caractéristique avantageuse l'élément chauffant blindé ménage une zone centrale libre de brins chauffants. Cette disposition permet de favoriser la convection dans le bain de cuisson.

Selon un mode de réalisation les moyens de régulation comportent une coupelle présentant une face supérieure venant en contact avec la zone de mesure, la coupelle étant montée mobile contre un ressort de rappel dans un logement du bouclier, un thermostat étant monté à l'intérieur de la coupelle. Avantageusement alors le logement est partiellement délimité par la nervure.

L'invention sera mieux comprise à l'étude d'un exemple de réalisation, pris à titre nullement limitatif, et illustré dans les figures annexées dans lesquelles :
- la figure 1 est une vue de la section verticale d'une friteuse selon l'invention,
- la figure 2 est une vue partielle éclatée de la friteuse montrée à la figure 1.

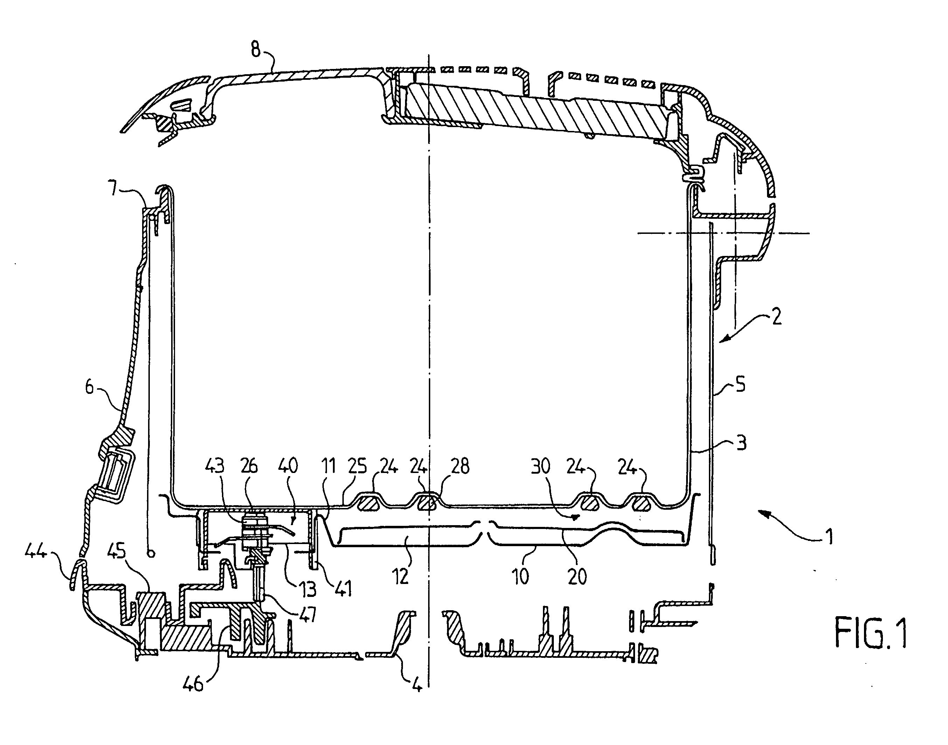

La figure 1 montre une friteuse 1 comportant un boîtier 2 formant un logement dans lequel est disposée une cuve de cuisson 3 amovible prévue pour recevoir la matière grasse du bain de cuisson. Des moyens électriques de chauffe 28 et des moyens de régulation 40 sont montés dans la partie inférieure du logement. La cuve 3 est de préférence réalisée en aluminium, et peut être revêtue sur sa face intérieure d'un revêtement anti-adhésif et sur sa face extérieure d'un revêtement absorbant les rayonnements, par exemple de type laque.

Le boîtier 2 comprend un socle 4 réalisé en matière plastique surmonté d'une virole 5 métallique. Le socle 4 peut être réalisé en une matière plastique peu onéreuse telle que le polypropylène. La virole 5 est réalisée par exemple en métal laqué ou en acier inoxydable. Une façade 6 est montée sur le socle 4 le long d'une partie de la virole 5. La façade 6 est avantageusement réalisée en matière plastique. Une bague 7 est montée sur le rebord supérieur de la virole 5. La bague 7 est avantageusement réalisée en une matière plastique résistant à la température de la cuve 3. Tel que montré à la figure 1, la cuve 3 comporte un bord supérieur venant en appui sur la bague 7. Un couvercle 8 est monté articulé sur la bague 7.

Un bouclier 10 est monté dans le fond du boîtier 2. Le bouclier 10 est fixé au socle 4. Le fond de la cuve 3 présente des zones de chauffe 24 prévues pour venir en appui sur les moyens électriques de chauffe 28 lorsque la cuve 3 est mise en place dans le boîtier 2. La cuve 3 peut être obtenue par emboutissage. Les moyens électriques de chauffe 28 sont formés par un élément chauffant blindé 30 monté sur un réflecteur 20 supporté par le bouclier 10.

Des moyens de régulation 40 sont montés mobiles en translation contre un ressort de rappel (non montré aux figures). Les moyens de régulation 40 comportent une coupelle 41 présentant une face supérieure 42 plaquée contre le fond de la cuve 3 grâce au ressort de rappel lorsque le couvercle 8 ferme le boîtier 2. Un thermostat 43 est monté à l'intérieur de la coupelle 41. La coupelle 41 est réalisée en un matériau bon conducteur de chaleur, par exemple en aluminium. La face supérieure 42 de la coupelle 41 vient en appui sur une zone de mesure 26 du fond de la cuve 3. La zone de mesure 26 présente une altitude inférieure à celle des zones de chauffe 24.

De manière préférée, telle que montré à la figure 1, le thermostat 43 est du type bimétallique et présente une température de consigne réglable. Un bouton 44 monté dans le socle 4 sur un axe 45 entraîne en rotation un secteur denté 46 solidaire d'une tige de commande 47 de la température de consigne du thermostat 43.

Le bouclier 10 présente une nervure 11 séparant une première aire 12, dans laquelle sont montés le réflecteur 20 et l'élément chauffant blindé 30, d'une deuxième aire 13, dans laquelle sont montés les moyens de régulation 40. Un voyant lumineux, non représenté aux figures, peut être monté en parallèle avec l'élément chauffant 30 pour indiquer à l'utilisateur la coupure du thermostat 43.

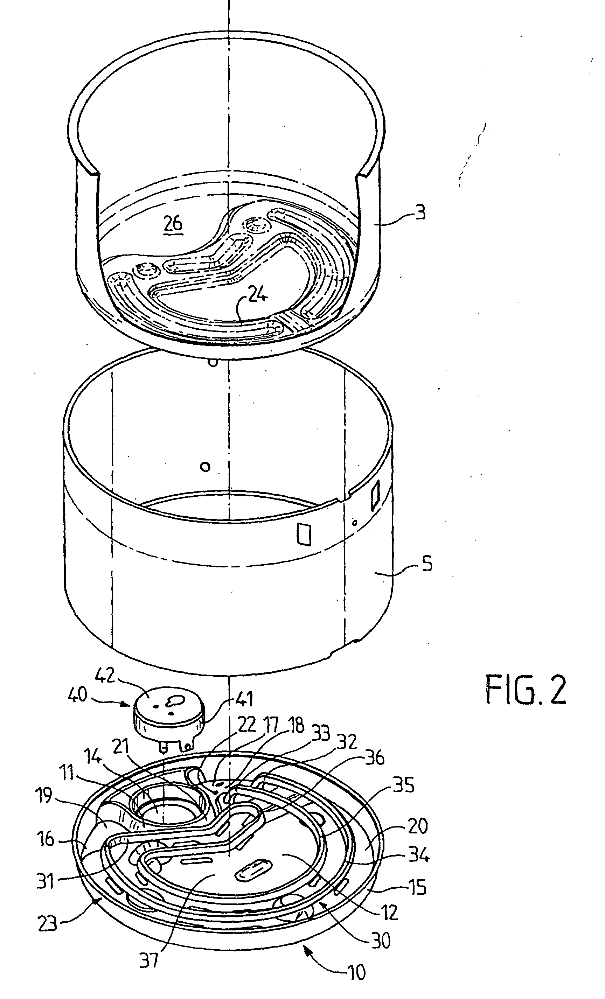

Tel que mieux visible à la figure 2, la première aire 12 présente une forme en haricot. Le bouclier 10 présente un bord périphérique relevé 15. Le réflecteur 20 occupe sensiblement tout l'espace disponible de la première aire 12 entre le bord 15 et la nervure 11 hormis aux deux extrémités 16, 17 du haricot.

La coupelle 41 est montée mobile en translation dans un logement 14 du bouclier 10. L'élément chauffant blindé 30 présente deux extrémités froides 32, 33 montées côte à côte à proximité de la nervure 11 et de l'extrémité 17 de l'aire 12 dépourvue de réflecteur. L'extrémité froide 32 de l'élément chauffant blindé 30 est prolongée par un brin chauffant extérieur 34 longeant à distance dans la première aire 12 le bord 15 du bouclier 10 et la nervure 11. L'autre extrémité froide 33 de l'élément chauffant blindé 30 est prolongée par un brin chauffant intérieur 35 longeant à distance le brin 34. Les brins 34, 35 sont sensiblement parallèles et sont reliés par une section chauffante 36 en U disposée à proximité des extrémités 32, 33. Le brin extérieur 34 longe les 3/4 environ de la périphérie du bouclier 10 et présente une partie 31 disposée à proximité du capteur 40. Le brin intérieur 35 entoure une zone centrale 37 libre de brins chauffants. Les zones de chauffe 24 suivent les brins 34, 35 et la section en U 36 de l'élément chauffant blindé 30.

Tel que bien visible à la figure 1, l'élément chauffant blindé 30 présente une section trapézoïdale. La cuve 3 vient en appui sur la face supérieure de l'élément chauffant blindé 30.

Un fusible thermique est serti sous le bouclier 10 dans une zone 18 correspondant à la face inférieure de l'extrémité 17 de l'aire 12. La zone 18 est disposée entre le bord 15, les extrémités froides 32 et 33 de l'élément chauffant blindé 30 et la nervure 11. Ainsi la zone 18 est dépourvue de réflecteur mais est protégée de l'influence directe des moyens de chauffe. A titre de variante le fusible thermique pourrait être disposé dans une zone 19 correspondant à la face inférieure de l'autre extrémité 16 de l'aire 12, également dépourvue de réflecteur et de moyens de chauffe.

Lorsqu'une quantité normale de bain de cuisson est présente dans la cuve, l'invention fonctionne de la manière suivante. La nervure 11 du bouclier 10 forme un premier écran thermique 21 protégeant au moins partiellement les moyens de régulation 40 du rayonnement et de la convection thermique issus des moyens de chauffe 28 formés par l'élément chauffant 30. Le positionnement latéral des moyens de régulation 40 par rapport aux moyens de chauffe 28 favorise la stabilisation de l'ambiance thermique autour du thermostat 43. Ainsi la première coupure du thermostat 43 lors de la montée en température peut intervenir à une température proche de la température de coupure en régime stabilisé, voire être légèrement supérieure. Ces dispositions permettent d'obtenir une température adéquate du bain de cuisson dès la première coupure du thermostat 43.

En l'absence de bain de cuisson dans la cuve ou en présence d'une faible quantité de bain de cuisson dans la cuve, l'invention fonctionne de la manière suivante. Le fond de la cuve 3 réalisée en un matériau bon conducteur de chaleur forme un pont thermique entre la partie 31 de l'élément chauffant 30 et les moyens de régulation 40. La proximité de la partie chauffante 31 et des moyens de régulation 40 facilite la régulation du thermostat 43. La face inférieure du bouclier 10 forme un deuxième écran thermique 22 protégeant le fusible thermique du rayonnement et au moins partiellement de la convection thermique issus des moyens de chauffe 28 formés par l'élément chauffant 30.

Le bord périphérique 15 du bouclier forme un troisième écran thermique 23 dirigeant les calories issues des moyens de chauffe 28 vers la cuve 3. Les parois latérales de la cuve 3 réalisées en un matériau bon conducteur de chaleur forment un radiateur facilitant l'évacuation des calories en l'absence de bain de cuisson dans la cuve 3 ou en présence d'une faible quantité de bain de cuisson.

De nombreuses améliorations et/ou adaptations peuvent être apportées à cet appareil dans le cadre des revendications.

Dans l'exemple précédemment décrit la face extérieure du fond de la cuve est réalisée en matériau bon conducteur de chaleur dans les zones de chauffe, dans la zone de mesure et dans les zones intermédiaires reliant les zones précitées, du fait que la cuve est réalisée en aluminium, revêtu ou non. Il n'est pas nécessaire que l'ensemble de la cuve soit réalisé en un matériau bon conducteur de chaleur. Une cuve en matériau colaminé, par exemple en acier inoxydable à l'intérieur et en aluminium à l'extérieur, ou encore un fond rapporté en matériau bon conducteur de chaleur peuvent notamment être envisagés.

Le bouclier peut être suspendu sur le socle au moyen de ressorts. L'élément chauffant est alors plaqué contre le fond de la cuve grâce aux ressorts lorsque le couvercle ferme le boîtier.

Les zones de chauffe peuvent être associées à un ou à plusieurs éléments chauffants.

La façade 6 peut être aisément supprimée du fait que les organes électriques sont montés dans le socle 4.

## Revendications

1. Appareil électrique de cuisson, notamment friteuse, comportant un boîtier (2) formant un logement prévu pour recevoir une cuve de cuisson (3) amovible, des moyens électriques de chauffe (28) venant en contact avec des zones de chauffe (24) de la cuve lorsque la cuve est en place dans le boîtier, des moyens de régulation (40) et un fusible thermique étant montés dans la partie inférieure du logement, les moyens de régulation venant en contact avec une zone de mesure (26) de la cuve lorsque la cuve est en place dans le boîtier, la zone de mesure (26) étant disposée latéralement par rapport aux zones de chauffe (24), un premier écran thermique (21) protégeant au moins partiellement les moyens de régulation (40) du rayonnement et de la convection thermique issus des moyens électriques de chauffe (28), la zone de mesure (26) associée aux moyens de régulation appartenant au fond de la cuve (3), **caractérisé en ce que** la face extérieure du fond de la cuve (3) est réalisée en matériau bon conducteur de chaleur dans la zone de mesure (26), dans les zones de chauffe (24) ainsi que dans une zone intermédiaire (25) reliant les zones de chauffe (24) à la zone de mesure (26), **en ce que** le fusible thermique est éloigné de la cuve (3) en place dans le boîtier (2), et **en ce qu'**un deuxième écran thermique (22) protège le fusible thermique du rayonnement et au moins partiellement de la convection thermique issus des moyens électriques de chauffe (28).

2. Appareil selon la revendication 1, **caractérisé en ce que** le fusible thermique est disposé à une altitude inférieure à celle des moyens électriques de chauffe (28).

3. Appareil selon l'une des revendications 1 ou 2, **caractérisé en ce que** le fusible thermique est disposé latéralement par rapport aux moyens électriques de chauffe (28).

4. Appareil selon l'une des revendications 1 à 3, **caractérisé en ce que** les zones de chauffe (24) sont surélevées par rapport à la zone de mesure (26).

5. Appareil selon l'une des revendications 1 à 4, **caractérisé en ce qu'**un troisième écran thermique (23) entoure latéralement les moyens électriques de chauffe (28).

6. Appareil selon la revendication 5, **caractérisé en ce que** le bord supérieur du troisième écran thermique (23) présente une altitude supérieure au fond de la cuve (3) disposée dans le boîtier (2).

7. Appareil selon l'une des revendications 1 à 6, **caractérisé en ce que** la cuve (3) comporte des parois latérales réalisées en un matériau bon conducteur de chaleur.

8. Appareil selon l'une des revendications 1 à 7, **caractérisé en ce que** les moyens électriques de chauffe (28) comprennent un élément chauffant blindé (30).

9. Appareil selon la revendication 8, **caractérisé en ce qu'**un bouclier (10) est disposé sous l'élément chauffant blindé (30).

10. Appareil selon la revendication 9, **caractérisé en ce que** le premier écran thermique (21 ) comprend une nervure (11 ) appartenant au bouclier (10).

11. Appareil selon l'une des revendications 9 ou 10, **caractérisé en ce que** le bouclier (10) forme le deuxième écran thermique (22).

12. Appareil selon l'une des revendications 9 à 11, **caractérisé en ce qu'**un réflecteur (20) est disposé entre l'élément chauffant blindé (30) et le bouclier (10).

13. Appareil selon l'une des revendications 8 à 12, **caractérisé en ce que** l'élément chauffant blindé (30) comporte un brin chauffant extérieur (34) longeant au moins les 2/3 de la périphérie du bouclier (10).

14. Appareil selon la revendication 13, **caractérisé en ce que** le brin chauffant extérieur (34) se prolonge le long du premier écran thermique (21).

15. Appareil selon l'une des revendications 8 à 14, **caractérisé en ce que** l'élément chauffant blindé (30) ménage une zone centrale (37) libre de brins chauffants (34, 35).

16. Appareil selon l'une des revendications 8 à 15, **caractérisé en ce que** les moyens de régulation (40) comportent une coupelle (41) présentant une face supérieure (42) venant en contact avec la zone de mesure (26), la coupelle (41) étant montée mobile contre un ressort de rappel dans un logement (14) du bouclier (10), un thermostat (43) étant monté à l'intérieur de la coupelle (41).

17. Appareil selon les revendications 10 et 16, **caractérisé en ce que** le logement (14) est partiellement délimité par la nervure (11 ).

## Patentansprüche

1. Elektrisches Kochgerät, insbesondere Fritiergerät, mit einem Gehäuse (2), das eine Aufnahme bildet, die dazu vorgesehen ist, einen abnehmbaren Behälter (3) aufzunehmen, wobei elektrische Heizmittel (28) dann mit Heizbereichen (24) des Behälters in Kontakt gelangen, wenn der Behälter in das Gehäuse eingesetzt ist, wobei Reguliermittel (40) und eine Wärmesicherung im unteren Teil der Aufnahme montiert sind, wobei die Reguliermittel dann mit einem Messbereich (26) des Behälters in Kontakt gelangen, wenn der Behälter in das Gehäuse eingesetzt ist, wobei der Messbereich (26) seitlich zu den Heizbereichen (24) angeordnet ist und eine erste Wärmeabschirmung (21) zumindest teilweise die Reguliermittel (40) vor der Strahlung und der Wärmekonvektion schützt, die von den elektrischen Heizmitteln (28) ausgehen, wobei der den Reguliermitteln zugeordnete Messbereich (26) zum Boden des Behälters (3) gehört, **dadurch gekennzeichnet, dass** die Außenseite des Bodens des Behälters (3) im Messbereich (26), in den Heizbereichen (24) sowie in dem die Heizbereiche (24) und den Messbereich (26) miteinander verbindenden Zwischenbereich (25) aus einem gut wärmeleitenden Material hergestellt ist, dass die Wärmesicherung von dem in das Gehäuse (2) eingesetzten Behälter (3) entfernt liegt und dass eine zweite Wärmeabschirmung (22) die Wärmesicherung vor der Strahlung und zumindest teilweise vor der Wärmekonvektion schützt, die von den elektrischen Heizmitteln (28) ausgehen.

2. Gerät nach Anspruch 1, **dadurch gekennzeichnet, dass** die Wärmesicherung in einer Höhe angeordnet ist, die geringer als die der elektrischen Heizmittel (28) ist.

3. Gerät nach einem der Ansprüche 1 oder 2, **dadurch gekennzeichnet, dass** die Wärmesicherung seitlich zu den elektrischen Heizmitteln (28) angeordnet ist.

4. Gerät nach einem der Ansprüche 1 bis 3, **dadurch gekennzeichnet, dass** die Heizbereiche (24) gegenüber dem Messbereich (26) angehoben sind.

5. Gerät nach einem der Ansprüche 1 bis 4, **dadurch gekennzeichnet, dass** eine dritte Wärmeabschirmung (23) die elektrischen Heizmittel (28) seitlich umgibt.

6. Gerät nach Anspruch 5, **dadurch gekennzeichnet, dass** der obere Rand der dritten Wärmeabschirmung (23) in einer Höhe liegt, die über dem Boden des in dem Gehäuse (2) angeordneten Behälters (3) liegt.

7. Gerät nach einem der Ansprüche 1 bis 6, **dadurch gekennzeichnet, dass** der Behälter (3) Seitenwände enthält, die aus einem gut wärmeleitenden Material hergestellt sind.

8. Gerät nach einem der Ansprüche 1 bis 7, **dadurch gekennzeichnet, dass** die elektrischen Heizmittel (28) ein abgeschirmtes Heizelement (30) enthalten.

9. Gerät nach Anspruch 8, **dadurch gekennzeichnet, dass** ein Schild (10) unter dem abgeschirmten Heizelement (30) angeordnet ist.

10. Gerät nach Anspruch 9, **dadurch gekennzeichnet, dass** die erste Wärmeabschirmung (21) eine dem Schild (10) zugehörende Rippe (11) enthält.

11. Gerät nach einem der Ansprüche 9 oder 10, **dadurch gekennzeichnet, dass** der Schild (10) die zweite Wärmeabschirmung (22) bildet.

12. Gerät nach einem der Ansprüche 9 bis 11, **dadurch gekennzeichnet, dass** zwischen dem abgeschirmten Heizelement (30) und dem Schild (10) ein Reflektor (20) angeordnet ist.

13. Gerät nach einem der Ansprüche 8 bis 12, **dadurch gekennzeichnet, dass** das abgeschirmte Heizelement (30) einen äußeren Heizstrang (34) enthält, der sich zumindest über 2/3 des Umfangs des Schilds (10) erstreckt.

14. Gerät nach Anspruch 13, **dadurch gekennzeichnet, dass** der äußere Heizstrang (34) sich entlang der ersten Wärmeabschirmung (21) fortsetzt.

15. Gerät nach einem der Ansprüche 8 bis 14, **dadurch gekennzeichnet, dass** das abgeschirmte Heizelement (30) einen Mittelbereich (37) ausspart, der frei von Heizsträngen (34, 35) ist.

16. Gerät nach einem der Ansprüche 8 bis 15, **dadurch gekennzeichnet, dass** die Reguliermittel (40) einen Teller (41) mit einer Oberseite (42) enthalten, die mit dem Messbereich (26) in Kontakt gelangt, wobei der Teller (41) entgegen einer Rückstellfeder beweglich in einer Aufnahme (14) des Schilds (10) gelagert ist, wobei ein Thermostat (43) innerhalb des Tellers (41) angebracht ist.

17. Gerät nach Anspruch 10 und 16, **dadurch gekennzeichnet, dass** die Aufnahme (14) teilweise von der Rippe (11) begrenzt wird.

## Claims

1. An electrical cooking appliance, in particular a deep fryer, comprising: a casing (2) forming a housing designed to receive a removable cooking vessel (3); electric heater means (28) coming into contact with heating zones (24) of the vessel when the vessel is in place in the casing; regulator means (40) and a thermal fuse both being mounted in the bottom portion of the housing, the regulator means coming into contact with a measuring zone (26) of the vessel when the vessel is in place in the casing, the measuring zone (26) being disposed laterally relative to the heating zones (24), a first heat screen (21) protecting, at least in part, the regulator means (40) from radiation and from heat convection coming from the electric heater means (28), the measuring zone (26) associated with the regulator means belonging to the bottom of the vessel (3), the appliance being **characterized in that** the outside face of the bottom of the vessel (3) in the measuring zone (26), in the heating zones (24), and in an intermediate zone (25) connecting the heating zones (24) to the measuring zone (26) is made of a material that is a good conductor of heat, **in that** the thermal fuse is remote from the vessel (3) in place in the casing (2), and **in that** a second heat screen (22) protects the thermal fuse from radiation and, at least in part, from heat convection coming from the electric heater means (28).

2. An appliance according to claim 1, **characterized in that** the thermal fuse is disposed at a height that is lower than the height of the electric heater means (28).

3. An appliance according to claim 1 or claim 2, **characterized in that** the thermal fuse is disposed laterally relative to the electric heater means (28).

4. An appliance according to any one of claims 1 to 3, **characterized in that** the heating zones (24) are raised relative to the measuring zone (26).

5. An appliance according to any one of claims 1 to 4, **characterized in that** a third heat screen (23) laterally surrounds the electric heater means (28).

6. An appliance according to claim 5, **characterized in that** the top edge of the third heat screen (23) is at a height higher than the bottom of the vessel (3) disposed in the casing (2).

7. An appliance according to any one of claims 1 to 6, **characterized in that** the vessel (3) includes side walls made of a material that is a good conductor of heat.

8. An appliance according to any one of claims 1 to 7, **characterized in that** the electric heater means (28) comprise a metal-clad heater element (30).

9. An appliance according to claim 8, **characterized in that** a shield (10) is disposed beneath the metal-clad heater element (30).

10. An appliance according to claim 9, **characterized in that** the first heat screen (21) includes a rib (11) belonging to the screen (10).

11. An appliance according to claim 9 or claim 10, **characterized in that** the shield (10) forms the second heat screen (22).

12. An appliance according to any one of claims 9 to 11, **characterized in that** a reflector (20) is disposed between the metal-clad heater element (30) and the shield (10).

13. An appliance according to any one of claims 8 to 12, **characterized in that** the metal-clad heater element (30) includes an outer strand (34) of the heater bordering at least two-thirds of the periphery of the shield (10).

14. An appliance according to claim 13, **characterized in that** the outer strand (34) of the heater extends along the first heat screen (21).

15. An appliance according to any one of claims 8 to 14, **characterized in that** the metal-clad heater element (30) provides a central zone (37) that is free of heater strands (34, 35).

16. An appliance according to any one of claims 8 to 15, **characterized in that** the regulator means (40) include a dish (41) presenting a top face (42) coming into contact with the measuring zone (26), the dish (41) being mounted to move against a return spring in a housing (14) of the shield (10), a thermostat (43) being mounted inside the dish (41).

17. An appliance according to claims 10 and 16, **characterized in that** the housing (14) is defined in part by the rib (11).
